# EUROPEAN PATENT SPECIFICATION

(11) **EP 1 944 878 B1**
(45) Date of publication and mention of the grant of the patent: **05.12.2012**
(21) Application number: 06811707.6
(22) Date of filing: 12.10.2006
(51) Int. Cl.: H04B 5/02, G06K 17/00, G06K 19/07, G06K 19/077, H01Q 7/06, H01Q 1/22

(54) **ELECTROMAGNETIC INDUCTION RFID TAG AND ACCESS UNIT**
RFID-ETIKETT MIT ELEKTROMAGNETISCHER INDUKTION UND ZUGANGSEINHEIT
ÉTIQUETTE RFID À INDUCTION ÉLECTROMAGNÉTIQUE ET UNITÉ D ACCÈS

(30) Priority: 14.10.2005 JP 2005300351
(43) Date of publication of application: 16.07.2008
(73) Proprietor: International Business Machines Corporation, Armonk, NY 10504 (US)
(72) Inventor: FUKUDA, Kaoru, Yamato-shi, Kanagawa 2428502 (JP); SAKURAI, Akihisa, Yamato-shi, Kanagawa 2428502 (JP); NISHINO, Hitoshi, Yamato-shi, Kanagawa 2428502 (JP); TAKASHIMA, Takaaki, Yamato-shi, Kanagawa 2428502 (JP)
(74) Representative: Waldner, Philip
(86) International application number: PCT/JP2006/320419
(87) International publication number: WO 2007/043626

(56) References cited:
- EP-A1- 0 549 832
- EP-A1- 0 693 733
- JP-A- 08 330 839
- JP-A- 2002 207 981
- JP-A- 2002 245 415
- JP-A- 2002 261 524
- FINKENZELLER K.: 'RFID Handbook-Hisesshoku IC Card no Genri to Oyo-', vol. 1ST ED., 03 March 2003, SOFUTO KOGAKU KENKYUSHO, ISBN 4-526-04701-5 pages 87 - 88, XP003010451

## Description

### DETAILED DESCRIPTION OF THE INVENTION

### Field of the Invention

The present invention relates to an electromagnetic inductive RFID tag and an apparatus for accessing the same, and more particularly, relates to an electromagnetic inductive RFID tag to be used along with an article containing a metal, and an apparatus for accessing the same.

### Background Art

Along with information networking, utilization of an RFID (Radio Frequency IDentification) tag system has become rapidly spread and developed. However, one of the problems to be yet solved is the application of an RFID tag to an article containing a metal. Since, in a normal RFID tag, if there is a metal not only at the front of the RFID tag but also in reverse or around thereof, both a magnetic field and an electric field are reflected or absorbed by the metal, information from the RFID tag cannot be correctly read.

It is said that, since, in an RFID tag using a low frequency band (equal to or less than 135 kHz), part of a magnetic field leaks to the outside through a gap of a metal, it enables to read information. However, as being susceptible to ambient electromagnetic noise, the low frequency band (equal to or less than 135 kHz) is not practical.

<Patent document 1> discloses an RFID tag forming a magnetic flux leakage path around a cylindrical antenna coil having a conducting wire wound on a rod-like (bar-like) magnetic core member. By using a leakage magnetic flux passing through the magnetic flux leakage path provided around the antenna coil, communication of the RFID tag around which is covered with a metal becomes possible.

<Patent document 2> discloses an RFID tag in which, instead of using a magnetic core member, an amorphous magnetic sheet is disposed between a discoidal antenna coil having spirally wound conducting wire and a metal. Since a magnetic field is induced along a surface of the amorphous magnetic sheet, communication of the RFID tag being attached close to the metal becomes possible.

<Patent document 3> discloses an RFID tag having a cylindrical antenna coil having used a flexible magnetic core member. Since, by providing a metal article with a recessed portion and housing the RFID tag in the recessed portion, it becomes possible to emit radio waves from an upper portion of the article, communication of the RFID tag being attached to the metal becomes possible.
<Patent document 1>
   "Japanese Unexamined Patent Publication (Kokai) No. 2002-208876"
<Patent Document 2>
   "Japanese Unexamined Patent Publication (Kokai) No. 2002-208814"
<Patent Document 3>
   "Japanese Unexamined Patent Publication (Kokai) No. 2002-261524"

EP 0 549832 A1 and EP 0 693733 A1 disclose antenna circuits for chip transponders, according to the pre-characterising portion of the independent claims.

In conventional metal-support RFID tags, however, at a location such as an inside of a factory that is extremely susceptible to electromagnetic noise generated from machineries or the like, there might be a case that, having received the influence from such a noise, any communication could not be made, and thereby enough reading accuracy could not be obtained. In addition, when attaching an RFID tag to an article, any space was required for providing a magnetic flux leakage path or disposing an amorphous magnetic sheet. Particularly, in order to embed an RFID in a metal, any space further larger than an antenna was required for assuring a return path of a magnetic flux, and thereby it was difficult to miniaturize the RFID tag.

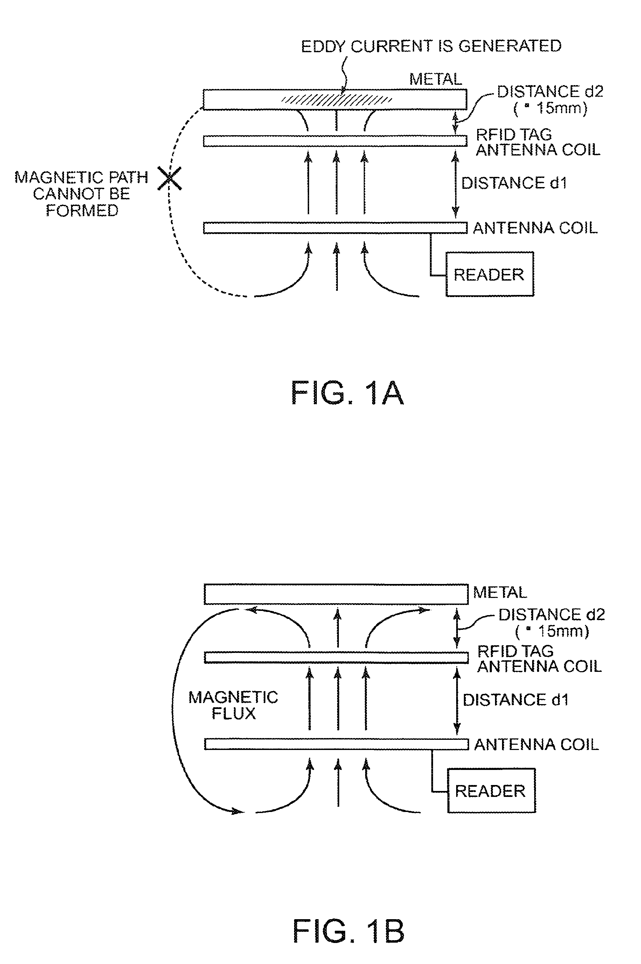

Fig. 1A is a conceptual diagram showing a magnetic path in case that a conventional RFID tag is attached to a metal surface. The RFID tag obtains an electromotive force owing to a magnetic field generated by an antenna on the reading apparatus side. When a current flows through the RFID tag, a magnetic field is generated also around the tag antenna, and thereby the current flows to the metal to which the RFID tag is attached. However, since the current flowing to the metal is an eddy current flowing in a direction for negating (or against) the magnetic field of the tag antenna, as a result, a magnetic path is not formed between the RFID tag and the reading apparatus, and thereby the RFID tag cannot be recognized. When a distance d2 between the RFID tag and the metal was smaller than a certain distance (15 mm in the present example), even if a distance d1 between the RFID tag and the reading apparatus was made to be 0 mm, there was a case that the RFID tag cannot be recognized. On the other hand, as shown in Fig. 1B, when the distance d2 was greater than the certain distance (15 mm or more in the present example), a magnetic path was formed and thereby the RFID tag could be recognized.

It is an object of the present invention to provide an electromagnetic inductive RFID tag applicable to an article containing a metal. Particularly, it is an object of the present invention to provide a miniaturized electromagnetic inductive RFID tag, not taking any space larger than an antenna size and enabling communication under very little influence of the metal even if embedded in an article containing a metal.

It is another object of the present invention to provide an apparatus for accessing information included in an IC chip of an electromagnetic inductive RFID tag having been applied to an article containing a metal. The apparatus is generally known as a reading apparatus, a reader, a reader/writer, or a scanner. The present invention is applicable in each case of reading or writing information included in the IC chip, and both reading and writing are referred to as "access". The present invention provides an access apparatus for being able to form a magnetic path without being little influenced by the metal of the casing, even when being mounted in a metal casing for eliminating the influence of electromagnetic noise in a factory.

It is still another object of the present invention to provide an RFID tag system that can be used along with an article containing a metal and that accesses an electromagnetic inductive RFID tag associated with information on the article in order to control or manage the information on the relevant article. It is yet another object of the present invention to provide a method of controlling or managing information on an article containing a metal.

### Summary of The Invention

The present invention provides an electromagnetic inductive RFID tag as claimed in claim 1, that may be embedded in an article containing a metal.

It is desirable that the magnetic core member is a U-shaped or approximately C-shaped magnetic substance or a magnetic substance whose cross-sectional surface passing through a center of the two end faces along a direction crossing the two end faces forms an E-shape.

The invention also provides an access apparatus for accessing an electromagnetic inductive RFID tag as claimed in claim 5.

The invention also provides an RFID system as claimed in claim 7.

The invention also provides a method as claimed in claim 12.

Aforementioned and other objects, and features of the present invention will be made more completely apparent if the following detailed descriptions are read along with the accompanying drawings. However, it should be noted that the drawings are for illustrative purposes only and do not limit the scope of the present invention.

### Brief Description of the Drawings

Fig. 1A is a diagram showing a state in which a conventional RFID tag is attached to a metal surface and Fig. 1B is a conceptual diagram showing a state in which the conventional RFID tag is attached to the metal surface, keeping the length of 15 mm or more from the metal surface.
Fig. 2 is a conceptual diagram showing an RFID system including an RFID tag and an access apparatus (reader) in background art useful in understanding the present invention.
Figs. 3A to 3E are conceptual diagrams showing an example of a shape of U-shaped or approximately C-shaped magnetic core member which is applied to the RFID tag and the access apparatus in background art useful in understanding the present invention.
Fig. 4 is a conceptual diagram showing a state in which the RFID tag in background art useful in understanding the present invention is embedded in an article.
Fig. 5 is a schematic diagram showing the access apparatus including a casing, in background art useful in understanding the present invention.
Figs. 6A and 6B are conceptual diagrams showing other embodiments of the RFID system including the RFID tag and the access apparatus, in the present invention.
Fig. 7A is a schematic diagram, Fig. 7B is a top view, and Fig. 7C is a cross-sectional view in case of cutting the member with a line A-A' of Fig. B, which show a pot-core type magnetic core member to be applied to the RFID tag and access apparatus in background art useful in understanding the present invention.
Figs. 8A to 8C are conceptual diagrams showing an example of a shape of an E-shaped magnetic core member to be applied to the RFID tag and the access apparatus in background art useful in understanding the present invention.
Fig. 9 is a flowchart showing a method of controlling an article by using the RFID system in the present invention.

### Best Mode for Carrying out the Invention

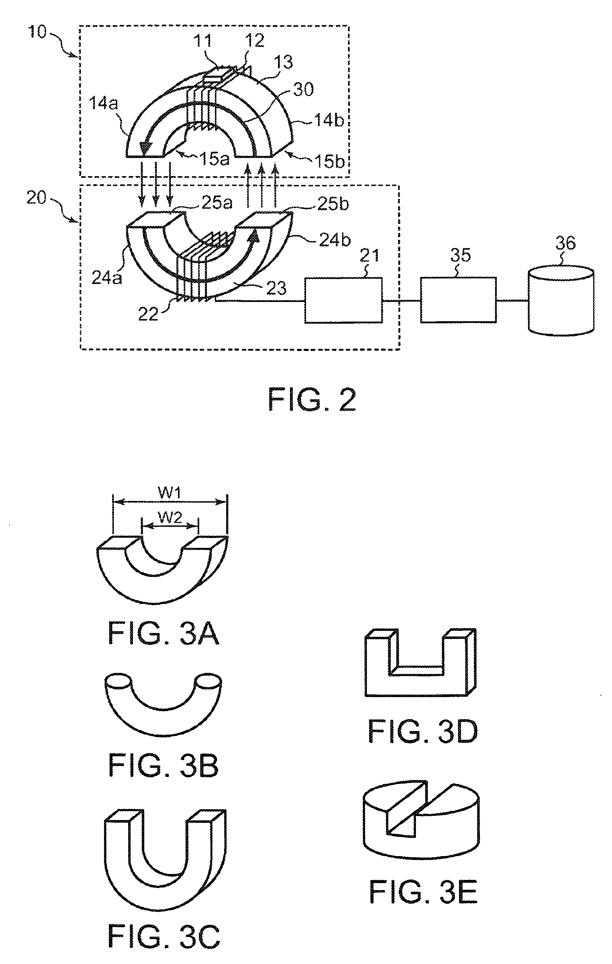

Fig. 2 is a schematic diagram showing an RFID tag 10 and an access apparatus 20 accessing information on the RFID tag, e.g., a reader, in background art useful for understanding the present invention. The RFID tag 10 includes an IC chip 11 storing information related to an article (e.g., an identification number of the article), and an antenna coil 12 connected to the IC chip. The antenna coil 12 may be a coated conducting wire (conductor), such as copper wire, and is wound on a magnetic core member 13. A magnetic flux 30 generated by a current flowing to the antenna coil 12 is concentrated inside the magnetic core member 13 on which the antenna coil 12 is wound, and thereby is induced by the magnetic core member 13. The magnetic core member 13 shown in Fig. 2 forms a U-shape (or horseshoe shape) and has two ends, 14a and 14b. Each end face, 15a or 15b of the two ends 14a and 14b is faced a direction which the reader 20 accesses, and induces such that a face which the magnetic flux 30 enters (15b in Fig. 2) and a face from which the magnetic flux 30 emits (15a in Fig. 2) are substantially on the same plane. Normally, the current flowing through the antenna coil 12 of the RFID tag 10 is alternate current, and hence, according to the change in the direction of the current, each of the end faces 15a and 15b alternately serves as the entering face and the emitting face. Note that the end faces 15a and 15b are not necessarily planars and may form projecting faces, projecting/recessed faces or inclined faces according to need. In case that there is no need to distinguish between the two ends 14a and 14b of the magnetic core member 13, the ends 14a and 14b may be collectively denoted by reference numeral 14. Similarly, the two end faces 15a and 15b of the magnetic core member 13 may be collectively denoted by reference numeral 15.

On the other hand, the access apparatus 20 includes a control unit 21 and an antenna coil 22 connected to the control unit 21. The control unit 21 includes a power supply and a matching circuit, and in addition, may further include any component, circuit, or element being used in a normal access apparatus, such as an amplifier or a circuit for controlling communication. The control unit is well known to those skilled in the art and thus a detailed description thereof will be omitted here. The access apparatus 20 also includes a similar U-shaped magnetic core member 23. A current supplied to the antenna coil 22 from the power supply of the control unit 21 generates a magnetic field, and a magnetic flux 30 is induced by the magnetic core member 23 to a direction of the RFID tag 10 surface such that an entering face (25a in Fig. 2) and an emitting face (25b in Fig. 2) are placed on the same plane. The access apparatus 20 also uses alternate current and thus the entering face and the emitting face are alternately switched. Hereinafter, ends and end faces of the magnetic core member 23 of the access apparatus 20 may also be collectively denoted by reference numerals 24 and 25 respectively.

Article information stored in the IC chip 11 is processed or stored in a normal information processing apparatus 35 and information storage apparatus 36 through the access apparatus 20. Specifically, the article information stored in the IC chip 11 includes at least article identification information. And, the identification information is read by the access apparatus 20, such as a reader, and sent through a communication line or a network (not shown) or directly to the information processing apparatus 35 connected to the access apparatus 20. The information storage apparatus 36 is connected to the information processing apparatus 35. The information processing apparatus 35 compares the identification information sent from the access apparatus with information stored in the information storage apparatus 36, and performs a process such as outputting information related to the inputted identification information and a process of updating the information related to the inputted identification information. The IC chip 11 can include, in addition to identification information, specific information such as an article name, a date manufactured, and a manufacturer. The information processing apparatus and the information storage apparatus may be different apparatuses such as a server system and a storage system or may be, for example, a single personal computer including both apparatuses.

Fig. 2 shows a state in which the reader 20 that is an access apparatus and the RFID tag 10 (hereinafter, simply referred to as the "tag") are disposed so as to enable communication with maximum accuracy. When the end faces 25 of the magnetic core member 23 of the reader 20 and the end faces 15 of the magnetic core member 13 of the tag 10 are disposed face to face with each other, the magnetic core member 23 of the reader 20 and the magnetic core member 13 of the tag 10 form a closed magnetic path 30. Therefore, it enables to minimize magnetic flux leakage, resulting in enabling communication with maximum accuracy. At this moment, the magnetic core member 23 of the reader 20 is not required to get contact with the magnetic core member 13 of the tag 10, and even if both are away from each other by several centimeters or several tens of centimeters, it is possible to make communication between both, depending on the amount of electric power supplied by the control unit 21 of the reader 20. Taking into consideration the influence of ambient noise or the like, it is desirable that the distance between the magnetic core member 23 of the reader 20 and the magnetic core member 13 of the tag 10 is within 10 cm. Even if the end faces 25 of the magnetic core member 23 of the reader 20 and the end faces 15 of the magnetic core member 13 of the tag 10 are not disposed to be just opposite to each other, communication between the tag 10 and the reader 20, including the magnetic core member in the present invention may be available, however, the maximum communication accuracy can be obtained when both end faces are disposed to be just opposite to each other.

Communication of the RFID tag 10 uses electromagnetic induction phenomena. In the electromagnetic induction phenomena, a magnetic field is generated by a current supplied to the antenna coil 22 from the control unit 21 of the reader 20 and the magnetic field generates, by means of electromagnetic induction, a current in the antenna coil 12 of the tag 10, and thereby the IC chip 11 is activated. The magnetic core member 23 of the reader 20 and the magnetic core member 13 of the tag 10 form the magnetic path 30 for inducing the flow of a magnetic flux. The configuration of the tag having adopted a magnetic core member can be used in any article, and in particular, the configuration may be applicable to articles containing metals, in which enough reading accuracy could not be obtained in conventional RFID tags. The RFID tag 10 is hardly influenced by the metal in accessing information stored in the IC chip 11, because the magnetic path 30 formed by the magnetic core member 13 induces the flow of a magnetic flux even if a metal is present on the back face of the tag or around the same. This favors not only the tag 10 but also the reader 20. This is because the magnetic core member 23 induces the flow of a magnetic flux to the reading faces 25, and thereby it enables to cover a portion other than the reading faces 25 with a metal. The metal covering the antenna coil 22 of the reader 20 serves as a shield against ambient noise, resulting in contribution to an improvement in reading accuracy.

The magnetic core member 13 of the respective tag 10 and the magnetic core member 23 of the reader 20 are respectively formed of a material containing a magnetic substance such as iron, cobalt, nickel, or an alloy thereof, iron oxide, chromium oxide, permalloy, or ferrite. The magnetic core members may be formed of bulks of such materials or may be formed in a method of forming a normal magnetic core, such as sintering, molding, curing, or the like by mixing powder or flakes of such materials with combined materials such as plastic, ceramic, or rubber.

There is no particular limitation in the size of the magnetic core members 13 and 23 of the respective tag 10 and reader 20. However, taking into consideration the fact that a voltage of at least 1 V, preferably 2 V or more is required for activating the IC chip 11 and the easiness in processing and attaching the members, it is appropriate that a longer width W1 (Fig. 3) of the magnetic core member at the entering/emitting faces of a magnetic flux may be several millimeters through several centimeters. More specifically, there is not any particular limitation in the shapes of the end faces 15 and 25 of the magnetic core members, however, since the larger the planar dimension (or area) of the end face is, the more the reading accuracy is improved, it is desirable that the diameter or the side length of the end face is at least longer than 1 mm. In order to form a magnetic path with a low leakage, it is desirable that the end faces of the two ends of the magnetic core member are equal in planar dimensions. In addition, since a distance W2 (Fig. 3) between the two ends of the magnetic member is related to a reading range in a direction horizontal to a reading face, it is preferably 10 cm long or less, and the lower limit of the distance may be almost close to each other, as long as the ends are insulated from each other. The distance W2 is preferably in the range between 3 mm or more and 3cm or less.

It is preferable that the magnetic core members 13 and 23 of the respective tag 10 and reader 20 are U-shaped (horseshoe shape) or approximately C-shaped. Fig. 3 shows some examples of the shapes of U-shaped or approximately C-shaped magnetic core members. The characteristics of these shapes consist in that each shape has two ends oriented in the same direction. Since, by forming ends oriented in the same direction, it becomes possible to make, with respect to the direction of the magnetic flux entering one side of the end face, a direction of a magnetic flux emitting from the other side of the end face to be approximately at an angle of 180 degrees within a reading face, and thereby it becomes easy to form a closed magnetic path between the magnetic core members of the reader and the tag. The closer the direction of an emitting magnetic flux is oriented to 180 degrees with respect to a direction of an entering magnetic flux, the easier it becomes to form a closed magnetic path, and thereby an improvement in reading accuracy can be expected. However, even if there is a deviation from 180 degrees by no more than ±10 degrees, it is possible to effectively induce the flow of a magnetic flux in application to an article including a metal. It will be understood by those skilled in the art that the shapes of the magnetic core member shown here are merely examples and that any shapes, other than such shapes, having the above-described characteristics, can be taken.

In order to obtain a high reading accuracy, it is important that the magnetic core member of the tag and the magnetic core member of the reader form a magnetic path with a low leakage. To do so, it is preferable that the size of the end faces and the distance between the two ends of the magnetic core member at the reading face of the reader are about the same as those at the reading face of the tag. The same magnetic core member as that of the reader can be used as the magnetic core member of the tag.

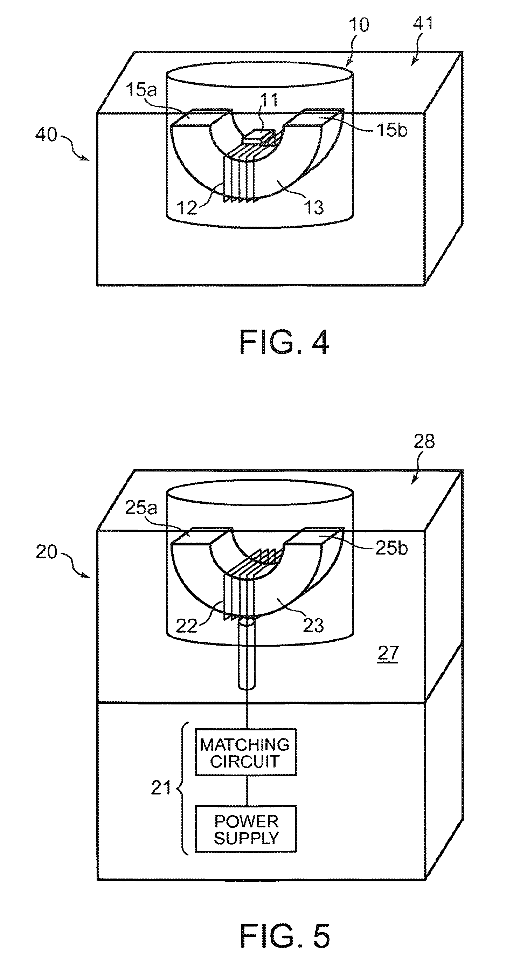

As shown in Fig. 4, the RFID tag can be used, embedded in an article 40. Such an article 40 may be made of a metal or may contain a metal. In Fig. 2, the IC chip 11 is disposed on a convex portion of the magnetic core member 13, and on the other hand, in Fig. 4, the IC chip 11 is disposed on a concave portion of the magnetic core member 13. The IC chip I can be disposed at any location connectable to the antenna coil 12. Any space between the tag 10 and the article 40 may be electrically insulated, and it is preferable that an appropriate nonconductive material, such as plastic or glass, may be intervened between the tag 10 and the article 40. If the tag can be disposed to be electrically insulated from the article, there may be air in the space between the tag and the article. As shown in Fig. 4, when the tag 10 is used, embedded in the article 40, the end faces 15 of the magnetic core member 13 of the tag 10 may be placed on the same plane as a face 41 of the article 40 or may be situated medial by about 10 mm to the face 41 of the article 40. Preferably, the tag 10 is disposed such that the end faces 15 are situated medial by 0 to 3 mm to the face of the article. Communication is possible, even if the ends 14 of the magnetic core member 13 of the tag 10 extend to the outside from the face 41 of the article 40, however, if the antenna coil 12 wound on the magnetic core member 13 is situated outside from the face 41 of the article 40 including a metal, the inductance may vary among individual articles attached tags, and thereby enough reading accuracy may not be possibly obtained. If the magnetic core member 13 is protruding from the face 41 of the article, the magnetic core member 13 may contact with other articles or the reader 20, possibly causing a breakage. For the reader or the access apparatus 20, as shown in Fig. 5, the end faces 25 of the magnetic core member 23 of the reader 20 are disposed so as to be situated medial by 0 to 10 mm to a reading face 28 of the reader 20. Preferably, the end faces 25 are disposed so as to be situated medial by 0 to 3 mm to the reading face 28. The access apparatus 20 includes a control unit 21 and an antenna coil 22 connected to the control unit 21. The control unit 21 includes a power supply and a matching circuit, and in addition, may further include any component, circuit, or element being used in a normal access apparatus, such as an amplifier or a circuit for controlling communication. As described above, the reader 20 can be disposed in a casing 27 including a metal, and thereby it is possible to decrease in the influence of ambient electromagnetic noise.

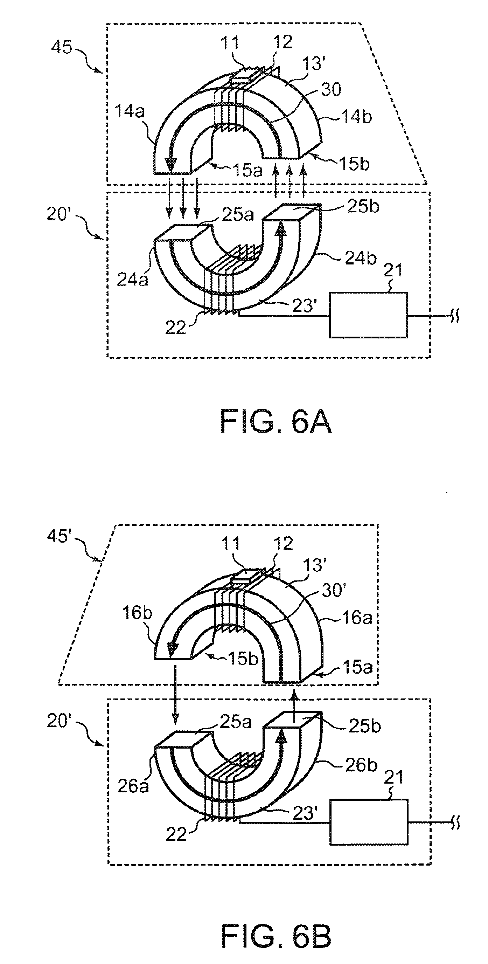

It is possible that the magnetic core member 13 of the tag have two ends and each of the end faces, 15a or 15b of the two ends is on the same plane, however, according to the present invention the two end faces 15a and 15b are not on the same plane and have a step. In this case, as shown in Fig. 6A, a magnetic core member of a reader 20' is also configured so as to have a step between end faces 25a and 25b of two ends, and to make the step between the end faces 25a and 25b of the magnetic core member 23' of the reader 20' to be complementary to the step of the magnetic core member 13' of the tag 45. By controlling the distance between the magnetic core member of the tag and the magnetic core member of the reader, and controlling the amount of electric power supplied from the reader, as shown in Fig. 6A, communication is enabled, when the magnetic core members 13' and 23' of respective tag 45 and reader 20' are disposed in a position that an end face 15a of a longer end 14a of the magnetic core member 13' of the tag 45 faces an end face 25a of a shorter end 24a of the magnetic core member 23' of the reader 20', and an end face 15b of a shorter end 14b of the magnetic core member 13' of the tag 45 faces an end face 25b of a longer end 24b of the magnetic core member 23' of the reader 20'. On the other hand, as shown in Fig. 6B, communication is disenabled, when magnetic core members 13' and 23' of respective tag 45' and reader 20' are disposed in a position that an end face 15a of a longer end 16a of the magnetic core member 13' of the tag 45' faces an end face 25b of a longer end 26b of the magnetic core member 23' of the reader 20'. Therefore, the direction of an article 45 to which the tag is attached can be identified.

When the tag in the present invention is attached to an article including a metal, particularly when the tag is embedded in the article, the tag may be influenced by the metal in the vicinity thereof, and as a result, the inductance of the antenna coil may be diminished. Since, if the inductance value is changed, the resonant frequency changes, the frequency of the antenna of the tag may possibly not resonate with the frequency of the antenna of the reader. In this case, by adjusting the number of winding of the antenna coil of the tag, the frequency can be tuned. The number of winding of the antenna coil of the tag can be determined by both a calculation and a experiment.

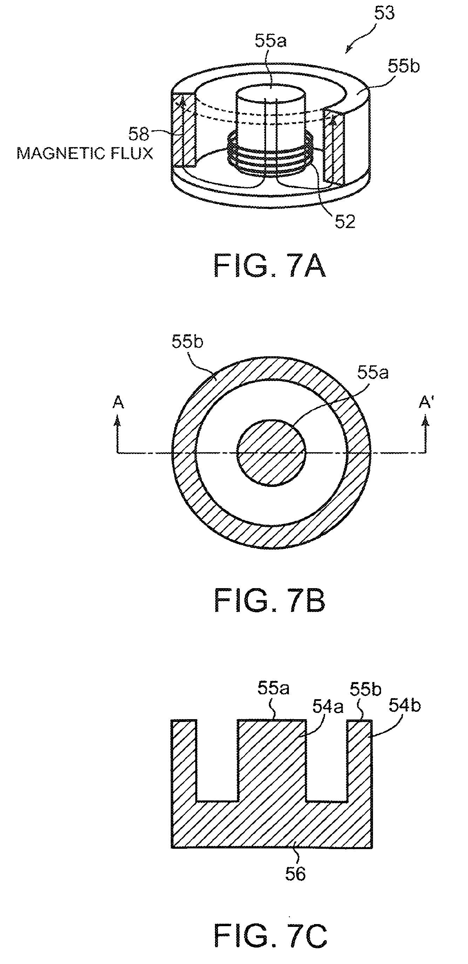

Fig. 7 shows another embodiment of the shape of a magnetic core member 53. The characteristics of this shape are the same as those of said U-shaped or approximately C-shaped magnetic core member in that the entering and emitting ends of a magnetic flux extend in the same direction, and thereby it is possible to make, with respect to a direction of the magnetic flux entering one end face, a direction of a magnetic flux emitting from the other end face within a reading face to be at an angle of 180 degrees, facilitating the formation of a closed magnetic path between the magnetic core members of the reader and the tag, however, differ from those of the magnetic core in that a cross-sectional surface passing through the center of two end faces along a direction A-A' (Fig. 7B) crossing the two end faces forms an E-shape (Fig. 7C). Typically, it is preferable to form a pot-core type of the magnetic core member 53 having a first end 54a extending vertically around the center of a circular bottom portion 56, and a second end 54b with annular structure for forming a doughnut-shaped end face 55b around the first end 54a extending vertically from the bottom portion 56, in which an antenna coil 52 is wound on the bottom portion side of the first end 54a. A magnetic flux to be generated when the pot-core type magnetic core member 53 is used is shown by line 58 in Fig. 7A. By forming such a shape, even if an article to which a tag is attached rotates within a reading face and comes close to a reader in any direction, it is possible to read information with high accuracy. Accordingly, in the embodiment in which a U-shaped or approximately C-shaped magnetic core member is used, when a cross-sectional surface crossing two end faces of a magnetic core member of a tag does not match a cross-sectional surface of a magnetic core member of a reader, particularly when the cross-sectional surface of the tag deviates by about 90 degrees from the cross-sectional surface of the reader, a reduction in reading accuracy occurred, however, in the embodiment in which a pot-core type magnetic core member was used, a reduction in reading accuracy does not occur.

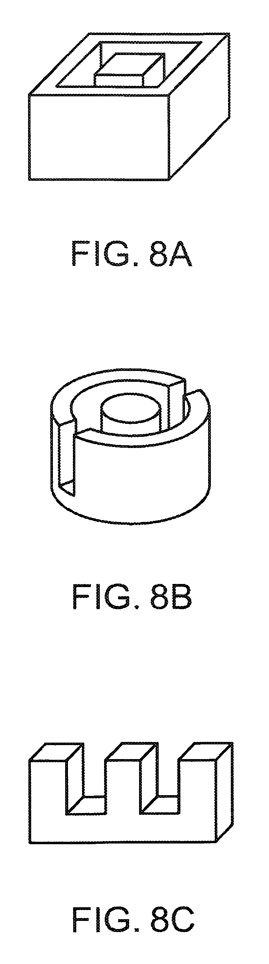

Fig. 8 shows some examples of shapes of a magnetic core member whose cross-sectional surface passing through the center of two end faces along a direction crossing the two end faces forms an E-shape. It will be understood by those skilled in the art that the shapes of the magnetic core member shown here are merely exemplifications, and any shape other than such shapes can be taken. In any of the E-shaped magnetic core members, an antenna coil is wound on the bottom portion side of a first end extending to the center of the bottom portion and when a face of the first end serves as a magnetic flux entering end face (emitting end face), a face of a second end disposed around the first end serves as a magnetic flux emitting end face (entering end face). Also in the E-shaped magnetic core members, it is desirable that the end face of the first end and the end face of the second end have approximately the same planar dimensions or area, in order to form a magnetic path with a low leakage. It is possible to use an E-shaped magnetic core member for any one of the reader and the tag, and to use a U-shaped magnetic core member for the other of the reader and the tag if the distance between the two ends of the respective magnetic core members is about the same. However, since, in order to form a magnetic path with a very low magnetic flux leakage, it is preferable that the planar dimension of the end faces of the magnetic core member at the reading face of the reader are about the same as that of the end faces at the reading face of the tag, it is the most preferable that the E-shaped magnetic core members are used for both the reader and the tag. As long as the magnetic core member satisfies such conditions, the shape of the end faces may be a circular, a rectangular, or any other shape.

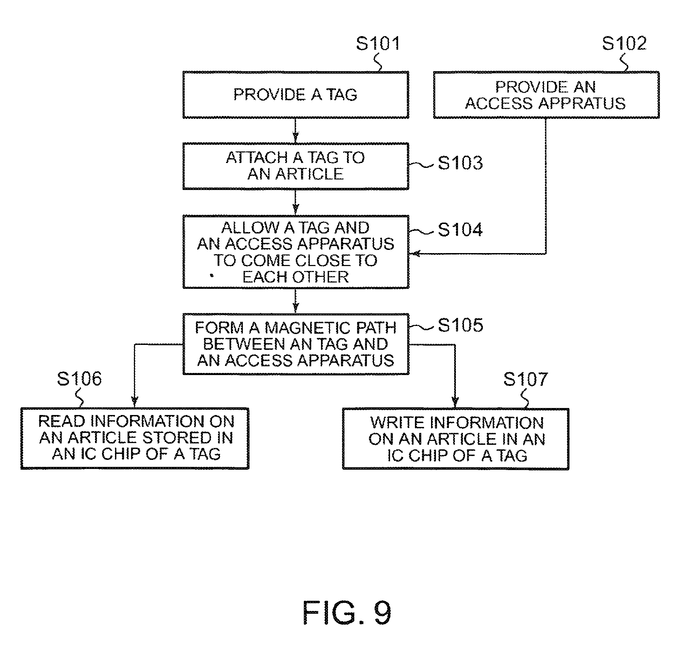

Fig. 9 is a flowchart showing a method of controlling or managing an article by using an RFID system in the present invention. The RFID system in the present invention can be attached to any articles including living bodies and food products, and particularly, has advantages in that the system can be attached to an article including a metal. First, an RFID tag in the present invention is provided (prepared) (S101) and then an access apparatus is provided (S102). It is desirable that the access apparatus includes a magnetic core member having two ends in the present invention, an antenna coil wound on the magnetic core member, and a control unit connected to the antenna coil, in which the two ends have end faces, respectively, and with respect to a direction of the magnetic flux entering one end face, a direction of a magnetic flux emitting from the other end face is approximately at an angle of 180 degrees, however, the access apparatus is not limited thereto. According to need, peripherals such as an information processing apparatus and an information storage apparatus may be prepared. The RFID tag provided (prepared) at S101 is attached to an article (S103). The RFID tag can be affixed to a surface of the article, can be tied to the article with a strap or the like, or can be embedded in the article, as described above. In case that the RFID tag cannot be directly attached to the article, the RFID tag may be attached to a container including the article internally. In an IC chip of the RFID tag provided at S101, information related to the article such as identification information may be already stored or may not be stored. The information related to the article can include any information other than the aforementioned identification information.

In controlling the article, the RFID tag in the present invention attached to the article at S103 and the access apparatus provided at S102 are moved to come close to each other (S104). At this step, the article may be moved toward the access apparatus disposed in a predetermined position, or on the contrary, the access apparatus may be moved toward the article. In the access apparatus, the current is supplied to the antenna coil from the control unit included in the access apparatus, and thereby a magnetic field is generated in the antenna coil. When the tag and the access apparatus come sufficiently close to each other with appropriate disposition, the magnetic field generated in the antenna coil of the access apparatus can generate, by electromagnetic induction, current in an antenna coil of the RFID tag, and thereby a magnetic path is formed between the RFID tag and the access apparatus (S105). Then, since a current is generated in the antennal coil of the RFID tag and thereby the IC chip is activated, it enables to read and write information to/from the IC chip (S106 and S107). Information having been read is inputted, through the access apparatus, to an information processing apparatus connected to the access apparatus and is processed there. Such a process may be the same process as the one normally performed by the information processing apparatus and a detailed description thereof will be omitted here.

The article control method in the present invention, because of enabling to control an article containing a metal, is advantageous in being applicable to management of a manufacturing process at a factory. Particularly, since an access apparatus in the present invention, including a U-shaped, approximately C-shaped, or an E-shaped magnetic core member and having a metal casing is unsusceptible to ambient electromagnetic noise, the apparatus is further useful. Furthermore, the article control method in the present invention is applicable to inventory control and distribution control of an article containing a metal.

### Description of Symbols

- 10:: RFID TAG
- 11:: IC CHIP
- 12:: ANTENNA COIL
- 13:: MAGNETIC CORE MEMBER
- 14a and 14b:: END
- 15a:: END FACE (EMITTING FACE)
- 15b:: END FACE (ENTERING FACE)
- 20:: ACCESS APPARATUS OR READER
- 21:: CONTROL UNIT
- 22:: ANTENNA COIL
- 23:: MAGNETIC CORE MEMBER
- 24a and 24b:: END
- 25a:: END FACE (ENTERING FACE)
- 25b:: END FACE (EMITTING FACE)
- 35:: INFORMATION PROCESSING APPARATUS
- 36:: INFORMATION STORAGE APPARATUS

## Claims

1. An electromagnetic inductive RFID tag (45) comprising:
a magnetic core (13) member having two ends (14a, 14b), each of the two ends having an end face (15a, 15b), in which, with respect to a direction of a magnetic flux (30) entering one side of one end face (15b), a direction of a magnetic flux emitting from one side of the other face (15a) is substantially at an angle of 180 degrees;
an antenna coil (12) wound on the magnetic core member; and
an IC chip (11) connected to the antenna coil, **characterised in that** the two end faces (15a, 15b) are not in the same plane and have a step there between.

2. The RFID tag according to claim 1, wherein the magnetic core member is a U-shaped or approximately C-shaped magnetic substance.

3. The RFID tag according to claim 1, wherein the magnetic core member is a magnetic substance whose cross- sectional surface passing through a center of the two end faces along a direction crossing the two end faces forms an E-shape.

4. The RFID tag according to claim 1, wherein one or both of: a) a distance between the two ends is 10 cm or less and the two ends are insulated from each other; b) the planar dimensions of the end faces of the two ends are substantially equal.

5. An apparatus (20') for accessing an electromagnetic inductive RFID tag, the apparatus comprising:
a magnetic core member (23') having two ends (26a, 26b), each of the two ends having an end face (25a, 25b), in which, with respect to a direction of the magnetic flux entering one side of one end face (25a), a direction of a magnetic flux emitting from one side of the other end face (25b) is substantially at an angle of 180 degrees;
an antenna coil (22) wound on the magnetic core member; and
a control unit (21) connected to the antenna coil, **characterised in that** the two end faces (25a, 25b) are not in the same plane and have a step there between.

6. The apparatus according to claim 5, wherein the RFID tag is the RFID tag according to any of claims 1 through 4.

7. An RFID system comprising:
the electromagnetic inductive RFID tag of any of claims 1-4; and
an access apparatus for accessing the electromagnetic inductive RFID tag, according to claim 5 or 6, **characterised in that** wherein the step between the end faces (15a, 15b) of the magnetic core member (13') of the RFID tag is complementary to the step between the end faces (25a, 25b) of the magnetic core member (23') of the access apparatus.

8. The RFID system according to claim 7, wherein
the RFID tag is attached to an article, and
when the end faces of the magnetic core member of the access apparatus and the end faces of the magnetic core member of the RFID tag come close to each other and thereby a magnetic path is formed between both magnetic core members, the access apparatus can access the RFID tag attached to the article.

9. The RFID system according to claim 8, wherein
the article contains a metal, and
the RFID tag is embedded in the article, and the end faces of the magnetic core member of the RFID tag are disposed on about the same plane as a surface of the article.

10. The RFID system according to claim 7, wherein a distance between the two ends of the magnetic core member of the RFID tag is approximately equal to a distance between the two ends of the magnetic core member of the access apparatus.

11. The RFID system according to claim 8, further comprising:
a storage apparatus storing information related to the article; and
an information processing apparatus being connected between the storage apparatus and the access apparatus for processing the information.

12. A method of controlling an article, comprising steps of:
providing an electromagnetic inductive RFID tag as claimed in any of claims 1-4 providing an access apparatus according to claims 5 or 6;
attaching the electromagnetic inductive RFID tag to the article;
allowing the RFID tag attached to the article and the access apparatus to come close to each other; and
forming a magnetic path between the RFID tag and the access apparatus to enable the access apparatus to access the RFID tag attached to the article, **characterised in that** wherein the step between the end faces (15a, 15b) of the magnetic core member (13) of the RFID tag is complementary to the step between the end faces (25a, 25b) of the magnetic core member (23) of the access apparatus.

13. The method according to claim 12, wherein the access apparatus includes a magnetic core member having two ends, an antenna coil wound on the magnetic core member, and a control unit connected to the antenna coil, the two ends having end faces respectively, in which, with respect to a direction of the magnetic flux entering one side of the end face, a direction of a magnetic flux emitting from the other side of the end face is substantially at an angle of 180 degrees, and the end faces of the magnetic core member of the access apparatus and the end faces of the magnetic core member of the RFID tag come close to each other, resulting in forming the magnetic path between both magnetic core members;
optionally the article contains a metal, and
the RFID tag is embedded in the article, and the end faces of the magnetic core member of the RFID tag are disposed on about the same plane as a surface of the article.

## Patentansprüche

1. Elektromagnetisches, induktives RFID-Etikett (45), das Folgendes umfasst:
ein Magnetkernbauteil (13) mit zwei Enden (14a, 14b), wobei jedes der beiden Enden eine Endfläche (15a, 15b) aufweist, in denen in Bezug auf eine Richtung eines in eine Seite einer Endfläche (15b) eintretenden magnetischen Flusses (30) eine Richtung eines aus einer Seite der anderen Fläche (15b) austretenden magnetischen Flusses im Wesentlichen um einen Winkel von 180 Grad gedreht ist,
eine Antennenspule (12), die um das Magnetkernbauteil gewickelt ist; und
einen IC-Chip (11), der mit der Antennenspule verbunden ist,
**dadurch gekennzeichnet, dass** die beiden Endflächen (15a, 15b) nicht in derselben Ebene liegen und sich zwischen beiden eine Stufe befindet.

2. RFID-Etikett nach Anspruch 1, wobei das Magnetkernbauteil aus einem U-förmigen oder annähernd C-förmigen magnetischen Werkstoff besteht.

3. RFID-Etikett nach Anspruch 1, wobei das Magnetkernbauteil aus einem magnetischen Werkstoff besteht, dessen Querschnittsfläche, die durch einen Mittelpunkt der beiden Endflächen in einer Richtung verläuft, welche die beiden Endflächen schneidet, die Form eines E bildet.

4. RFID-Etikett nach Anspruch 1, wobei: a) ein Abstand zwischen den beiden Enden 10 cm oder weniger beträgt und die beiden Enden voneinander isoliert sind; und/oder b) die Flächenabmessungen der Endflächen der beiden Enden im Wesentlichen gleich sind.

5. Vorrichtung (20') zum Zugreifen auf ein elektromagnetisches, induktives RFID-Etikett, wobei die Vorrichtung Folgendes umfasst:
ein Magnetkernbauteil (23') mit zwei Enden (26a, 26b), wobei jedes der beiden Enden eine Endfläche (25a, 25b) aufweist, an denen in Bezug auf eine Richtung eines in eine Seite einer Endfläche (25a) eintretenden magnetischen Flusses eine Richtung eines aus einer Seite der anderen Endfläche (25b) austretenden magnetischen Flusses im Wesentlichen um einen Winkel von 180 Grad gedreht ist,
eine Antennenspule (22), die um das Magnetkernbauteil gewickelt ist; und
eine Steuereinheit (21), die mit der Antennenspule verbunden ist,
**dadurch gekennzeichnet, dass** die beiden Endflächen (25a, 25b) nicht in derselben Ebene liegen und sich zwischen beiden eine Stufe befindet.

6. Vorrichtung nach Anspruch 5, wobei es sich bei dem RFID-Etikett um das RFID-Etikett nach einem der Ansprüche 1 bis 4 handelt.

7. RFID-System, das Folgendes umfasst:
das elektromagnetische, induktive RFID-Etikett nach einem der Ansprüche 1 bis 4; und eine Zugriffvorrichtung zum Zugreifen auf das elektromagnetische, induktive RFID-Etikett nach Anspruch 5 oder 6,
**dadurch gekennzeichnet, dass**
die Stufe zwischen den Endflächen (15a, 15b) des Magnetkernbauteils (13') des RFID-Etiketts zu der Stufe zwischen den beiden Endflächen (25a, 25b) des Magnetkernbauteils (23') der Zugriffvorrichtung komplementär ist.

8. RFID-System nach Anspruch 7, wobei
das RFID-Etikett an einem Artikel angebracht ist, und
die Zugriffvorrichtung auf das an dem Artikel angebrachte RFID-Etikett zugreifen kann, wenn die Endflächen des Magnetkernbauteils der Zugriffvorrichtung und die Endflächen des Magnetkernbauteils des RFID-Etiketts einander nahe kommen und dadurch zwischen den beiden Magnetkernbauteilen ein magnetischer Pfad gebildet wird.

9. RFID-System nach Anspruch 8, wobei
der Artikel ein Metall enthält, und
das RFID-Etikett in den Artikel integriert ist und die Endflächen des Magnetkernbauteils in ungefähr derselben Ebene angeordnet sind wie eine Oberfläche des Artikels.

10. RFID-System nach Anspruch 7, wobei ein Abstand zwischen den beiden Enden des Magnetkernbauteils des RFID-Etiketts ungefähr gleich einem Abstand zwischen den beiden Enden des Magnetkernbauteils der Zugriffvorrichtung ist.

11. RFID-System nach Anspruch 8, das ferner Folgendes umfasst:
eine Speichervorrichtung zum Speichern von Daten über den Artikel; und
eine zwischen die Speichervorrichtung und die Zugriffvorrichtung geschaltete Datenverarbeitungsvorrichtung zum Verarbeiten der Daten.

12. Verfahren zum Prüfen eines Artikels, wobei das Verfahren die folgenden Schritte umfasst:
Bereitstellen eines elektromagnetischen, induktiven RFID-Etiketts nach einem der Ansprüche 1 bis 4;
Bereitstellen einer Zugriffvorrichtung nach Anspruch 5 oder 6;
Anbringen des elektromagnetischen, induktiven RFID-Etiketts an dem Artikel;
Ermöglichen, dass das an dem Artikel angebrachte RFID-Etikett und die Zugriffvorrichtung einander nahe kommen; und
Bilden eines magnetischen Pfades zwischen dem RFID-Etikett und der Zugriffvorrichtung, damit die Zugriffvorrichtung auf das an dem Artikel angebrachte RFID-Etikett zugreifen kann, **dadurch gekennzeichnet, dass** die Stufe zwischen den Endflächen (15a, 15b) des Magnetkernbauteils (13) des RFID-Etiketts zu der Stufe zwischen den Endflächen (25a, 25b) des Magnetkernbauteils (23) der Zugriffvorrichtung komplementär ist.

13. Verfahren nach Anspruch 12, wobei die Zugriffvorrichtung ein Magnetkernbauteil mit zwei Enden, eine um das Magnetkernbauteil gewickelte Antennenspule und eine mit der Antennenspule verbundene Steuereinheit beinhaltet, wobei die beiden Enden jeweils Endflächen aufweisen, an denen in Bezug auf eine Richtung des in eine Seite der Endfläche eintretenden magnetischen Flusses eine Richtung eines aus der anderen Seite der Endfläche austretenden magnetischen Flusses im Wesentlichen um einen Winkel von 180 Grad gedreht ist, und wobei die Endflächen des Magnetkernbauteils der Zugriffvorrichtung und die Endflächen des Magnetkernbauteils des RFID-Etiketts einander nahe kommen, wodurch zwischen den beiden Magnetkernbauteilen ein magnetischer Pfad gebildet wird;
der Artikel wahlweise ein Metall enthält; und
das RFID-Etikett in den Artikel integriert ist und die Endflächen des Magnetkernbauteils des RFID-Etiketts in ungefähr derselben Ebene wie eine Oberfläche des Artikels angeordnet sind.

## Revendications

1. Etiquette RFID à induction électromagnétique (45) comprenant :
un élément de noyau magnétique (13) ayant deux extrémités (14a, 14b), chacune des deux extrémités ayant une face d'extrémité (15a, 15b), dans laquelle, par rapport à une direction d'un flux magnétique (30) entrant dans un côté d'une face d'extrémité (15b), une direction d'un flux magnétique émettant depuis un côté de l'autre face (15a) est substantiellement à un angle de 180 degrés,
une bobine d'antenne (12) enroulée sur l'élément de noyau magnétique ; et
une puce à circuit intégré (11) connectée à la bobine d'antenne,
**caractérisée en ce que** les deux faces d'extrémité (15a, 15b) ne sont pas dans le même plan et ont un gradin entre elles.

2. Etiquette RFID selon la revendication 1, dans laquelle l'élément de noyau magnétique est une substance magnétique en forme de U ou approximativement en forme de C.

3. Etiquette RFID selon la revendication 1, dans laquelle l'élément de noyau magnétique est une substance magnétique dont la surface de section transversale passant à travers un centre des deux faces d'extrémité le long d'une direction traversant les deux faces d'extrémité prend une forme de E.

4. Etiquette RFID selon la revendication 1, dans laquelle une ou les deux de : a) une distance entre les deux extrémités est 10 cm ou inférieur et les deux extrémités sont isolées l'une de l'autre ; b) les dimensions planaires des faces d'extrémité des deux extrémités sont substantiellement égales.

5. Dispositif (20') d'accès à une étiquette RFID à induction électromagnétique, le dispositif comprenant :
un élément de noyau magnétique (23') ayant deux extrémités (26a, 26b), chacune des deux extrémités ayant une face d'extrémité (25a, 25b) dans laquelle, par rapport à une direction du flux magnétique entrant dans un côté d'une face d'extrémité (25a), une direction d'un flux magnétique émettant à partir d'un côté de l'autre face d'extrémité (25b) est substantiellement à un angle de 180 degrés,
une bobine d'antenne (22) enroulée sur l'élément de noyau magnétique ; et
une unité de commande (21) connectée à la bobine d'antenne,
**caractérisé en ce que** les deux faces d'extrémité (25a, 25b) ne sont pas dans le même plan et ont un gradin entre elles.

6. Dispositif selon la revendication 5, dans lequel l'étiquette RFID est l'étiquette RFID selon l'une quelconque des revendications 1 à 4.

7. Système RFID comprenant :
l'étiquette RFID à induction électromagnétique selon l'une quelconque des revendications 1 à 4 ; et un dispositif d'accès pour accéder à l'étiquette RFID à induction électromagnétique, selon les revendications 5 ou 6, **caractérisé en ce que** le gradin entre les faces d'extrémité (15a,15b) de l'élément de noyau magnétique (13') de l'étiquette RFID est complémentaire au gradin entre les faces d'extrémité (25a, 25b) de l'élément de noyau magnétique (23') du dispositif d'accès.

8. Système RFID selon la revendication 7, dans lequel :
l'étiquette RFID est fixée à un article, et
quand les faces d'extrémité de l'élément de noyau magnétique du dispositif d'accès et les faces d'extrémité de l'élément de noyau magnétique de l'étiquette RFID se rapprochent les unes des autres et qu'un trajet magnétique est ainsi formé entre les deux éléments de noyau magnétique, le dispositif d'accès peut accéder à l'étiquette RFID fixée à l'article.

9. Système RFID selon la revendication 8, dans lequel :
l'article contient un métal, et
l'étiquette RFID est incorporée dans l'article, et les faces d'extrémité de l'élément de noyau magnétique de l'étiquette RFID sont disposées sur approximativement le même plan qu'une surface de l'article.

10. Système RFID selon la revendication 7, dans lequel une distance entre les deux extrémités de l'élément de noyau magnétique de l'étiquette RFID est approximativement égale à une distance entre les deux extrémités de l'élément de noyau magnétique du dispositif d'accès.

11. Système RFID selon la revendication 8, comprenant en outre :
un dispositif de mémorisation mémorisant des informations relatives à l'article ; et
un dispositif de traitement d'informations étant connecté entre le dispositif de mémorisation et le dispositif d'accès pour traiter l'information.

12. Procédé de commande d'un article, comprenant les étapes consistant à :
fournir une étiquette RFID à induction électromagnétique selon l'une quelconque des revendications 1 à 4 ;
fournir un dispositif d'accès selon les revendications 5 ou 6 ;
fixer l'étiquette RFID à induction électromagnétique à l'article ;
permettre à l'étiquette RFID fixée à l'article et au dispositif d'accès de se rapprocher l'une de l'autre ; et
former un trajet magnétique entre l'étiquette RFID et le dispositif d'accès afin de permettre au dispositif d'accès d'accéder à l'étiquette RFID fixée à l'article, **caractérisé en ce que** le gradin entre les faces d'extrémité (15a,15b) de l'élément de noyau magnétique (13) de l'étiquette RFID est complémentaire au gradin entre les faces d'extrémité (25a, 25b) de l'élément de noyau magnétique (23) du dispositif d'accès.

13. Procédé selon la revendication 12, dans lequel le dispositif d'accès inclut un élément de noyau magnétique ayant deux extrémités, une bobine d'antenne enroulée sur l'élément de noyau magnétique, et une unité de commande connectée à la bobine d'antenne, les deux extrémités ayant des faces d'extrémité respectivement, dans lesquelles, par rapport à une direction du flux magnétique entrant dans un côté de la face d'extrémité, une direction d'un flux magnétique émettant à partir de l'autre côté de la face d'extrémité est substantiellement à un angle de 180 degrés, et les faces d'extrémité de l'élément de noyau magnétique du dispositif d'accès et les faces d'extrémité de l'élément de noyau magnétique de l'étiquette RFID se rapprochent les unes des autres, entraînant la formation du trajet magnétique entre les deux éléments de noyau magnétique ;
optionnellement l'article contient un métal, et
l'étiquette RFID est incorporée dans l'article, et les faces d'extrémité de l'élément de noyau magnétique de l'étiquette RFID sont disposées sur approximativement le même plan qu'une surface de l'article.
